# EUROPEAN PATENT SPECIFICATION

(11) **EP 4 567 488 B1**
(45) Date of publication and mention of the grant of the patent: **29.07.2026**
(21) Application number: 23214624.1
(22) Date of filing: 06.12.2023
(51) Int. Cl.: G02B 6/46, H01B 9/00, H02G 1/14

(54) **METHOD OF JOINTING, TERMINATING OR REPAIRING A POWER CABLE**
VERFAHREN ZUM VERBINDEN, ABSCHLIESSEN ODER REPARIEREN EINES STROMKABELS
PROCÉDÉ DE JONCTION, TERMINAISON OU RÉPARATION D'UN CÂBLE D'ALIMENTATION

(43) Date of publication of application: 11.06.2025
(73) Proprietor: NKT HV Cables AB, 371 60 Lyckeby (SE)
(72) Inventor: ÖHBERG, Andreas, Lyckeby (SE); ÖDEMARK, Ola, Karlskrona (SE); CHRONVALL, Niklas, Lyckeby (SE); NILSSON, Jonas, Jämjö (SE); GUSTAFSSON, Henrik, Vissefjärda (SE); STÅHL, Johan, Norrköping (SE); ELFGEN, Markus, Rhauderfehn (DE); MANJUNATHA, Srinivasa, Göteborg (SE)
(74) Representative: Kransell & Wennborg KB

(56) References cited:
- JP-A- H0 694 929
- SE-A1- 2 150 062
- US-A- 4 830 457

## Description

### TECHNICAL FIELD

The present disclosure generally relates to power cables comprising a fibre optic cable.

### BACKGROUND

Power cables may comprise one or more fibre optic cables. The fibre optic cable or cables is/are typically arranged helically inside the power cable, for example in the screen layer comprising a plurality of helically laid metal wires.

It is sometimes necessary to carry out work on a power cable. Such work may involve jointing of two cable lengths, repairing a damaged layer, or terminating the power cable. This work typically requires that cable layers are removed, for example all the way down to the conductor in case of jointing and terminating. This means that also the fibre optic cable needs to be handled during the process of working on the power cable. The fibre optic cable is however fragile, and there is a risk of breaking optical fibres if the fibre optic cable is overbent. SE 2 150 062 A1 discloses a prior art method of terminating a power cable.

### SUMMARY

In view of the above, an object of the present disclosure is to provide a method which solves or at least mitigates the problems of the prior art.

There is hence according to the invention provided a method of jointing, terminating, or repairing a power cable, the method comprising: a) providing a power cable comprising: a conductor, an insulation system which includes an inner semiconducting layer arranged around the conductor, an insulation layer arranged around the inner semiconducting layer, and an outer semiconducting layer arranged around the insulation layer, and a fibre optic cable, b) removing outer layers of the power cable along an axial section of the power cable until reaching the outer semiconducting layer, and removing the fibre optic cable from the axial section to thereby obtain a loose fibre optic cable section, c) arranging a fibre optic cable holder around the outer semiconducting layer of the axial section, the fibre optic cable holder having a fibre optic cable storing section that has an outer radius which is equal to or larger than a minimum bending radius of the fibre optic cable, d) winding the loose fibre optic cable section around the fibre optic cable storing section, and e) performing jointing, terminating, or repair work on the power cable, step e) including unwinding the loose fibre optic cable section from the fibre optic cable holder, removing the fibre optic cable holder from the power cable, and terminating or jointing the loose fibre optic cable section.

The fibre optic cable can thus be handled in a way which reduces the risk of the fibre optic cable becoming damaged while work is carried out on the power cable. Additionally, the fibre optic cable holder provides a simple and economical way to protect the fibre optic cable during jointing, terminating, and repair work.

According to one embodiment step e) involves winding the loose fibre optic cable section around the axial section before terminating or jointing the loose fibre optic cable section. The loose fibre optic cable section may thus be wound around the axial section after it has been unwound from the fibre optic cable holder.

According to one embodiment the fibre optic cable holder has a tapering section that transitions into the fibre optic cable storing section, wherein prior to step d) the loose fibre optic cable section is lead along the tapering section to the fibre optic cable storing section. The loose fibre optic cable section may thus be led to the fibre optic cable storing section in a controlled way along the tapering section.

According to one embodiment the tapering section is frustoconical.

According to one embodiment the fibre optic cable holder comprises circumferentially distributed and circumferentially spaced apart radially outward extending wings, between which the loose fibre optic cable section is led from the tapering section to the fibre optic cable storing section.

According to one embodiment the fibre optic cable holder comprises a radially outwards extending end structure arranged axially spaced apart from the radially outwards extending wings, the fibre optic cable storing section being formed axially between the radially outwards extending wings and the radially outwards extending end structure, wherein in step d) the loose fibre optic cable section is wound between the radially outwards extending wings and the radially outwards extending end structure.

According to one embodiment the fibre optic cable holder comprises several parts, and wherein step c) involves arranging the parts around the axial section and attaching the parts to each other.

According to one embodiment the parts are attached to each other by means of tape.

According to one embodiment after step d) an end of the loose fibre optic cable section is fixated to the fibre optic cable holder.

According to one embodiment the end of the loose fibre optic cable section is fixated by means of tape.

According to one embodiment the power cable comprises a screen layer including a plurality of screen wires and the fibre optic cable helically around the insulation system, wherein step b) involves bending the screen wires away from the axial section to expose the outer semiconducting layer.

According to one embodiment in step c) the fibre optic cable holder is arranged adjacent to an axial location where the screen wires are bent.

According to one embodiment the fibre optic cable is a fibre optic cable in metal tube (FIMT).

According to one embodiment the axial section is a plurality of metres long.

According to one embodiment the power cable is a land power cable.

The power cable may be a medium voltage or a high voltage power cable. The term high voltage as used herein has no upper limit, and may start at e.g., 36 kV or 72 kV.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 is a cross-sectional view of an example of a power cable;
Fig. 2 is a perspective view of a schematic example of a fibre optic cable holder;
Fig. 3 is a flowchart of a method of jointing, terminating, or repairing a power cable; and
Fig. 4 is a schematic perspective view of a power cable with the fibre optic cable holder of Fig. 2 arranged around it during work carried out on the power cable.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept which is defined by the claims to those skilled in the art.

Like numbers refer to like elements throughout the description.

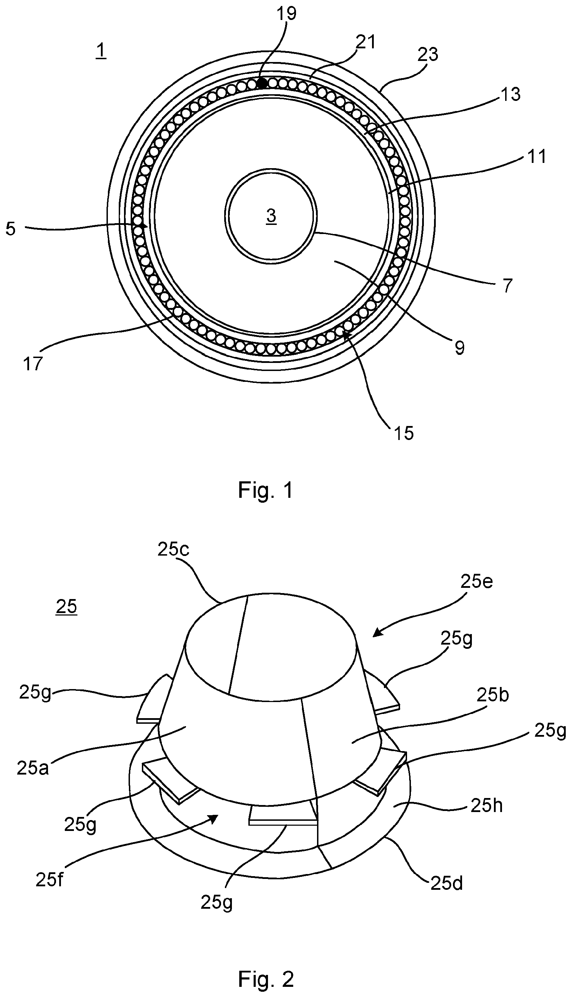

Fig. 1 shows a cross section of an example of a power cable 1.

The power cable 1 is one example of a power cable 1 suitable for use with a fibre optic cable holder 2, an example of which is shown in Fig. 2.

The exemplified power cable 1 is a single power core power cable.

Alternatively, the power cable 1 could have a plurality of power cores. The power cable 1 may be a DC power cable or an AC power cable.

The power cable 1 is preferably a land, or underground, power cable but could alternatively be a submarine power cable.

The power cable 1 comprises a conductor 3, and an insulation system 5 arranged around the conductor 3.

The insulation system 5 may comprise an inner semiconducting layer 7 arranged around the conductor 3, an insulation layer 9 arranged around the inner semiconducting layer 7, and an outer semiconducting layer 11 arranged around the insulation layer 9. The insulation system 5 may be an extruded polymer insulation system or comprise layers of mass-impregnated paper.

The power cable 1 may further comprise a bedding layer 13 arranged around the outer semiconducting layer 11.

According to the example, the power cable 1 comprises a screen layer 15 arranged radially outside the bedding layer 13. The screen layer 15 comprises a plurality of screen wires 17. The screen wires 17 are laid helically along the longitudinal axis of the power cable 1. The screen wires 17 may for example be made of copper or a copper alloy, or any other suitable metal material as would be apparent to the skilled person.

The power cable 1 further comprises a fibre optic cable 19. The power cable 1 may according to some examples comprise more than one fibre optic cable 19. The fibre optic cable 19 may be laid helically along the longitudinal axis of the power cable 1. According to the present example, the one or more fibre optic cable 19 is arranged in the screen layer 15. Other locations in which the fibre optic cable could alternatively be arranged are for example inside the conductor, in interstices between power cores in case the power cable has more than one power core, or in the armour layer for example in a submarine power cable.

The fibre optic cable 19 may be a fibre in metal tube (FIMT) type of fibre optic cable. The fibre optic cable 19 may thus comprise one or more optical fibres arranged in a metal tube, such as a steel tube.

The power cable 1 may comprise additional layers, such as a water blocking layer 21 arranged outside the screen layer 15, and one outer layer 23, which is the outermost layer of the power cable 1. The water blocking layer 21 may for example comprise a tape such as a metal tape, or a longitudinally bonded laminated metal-polymer sheath.

Fig. 2 schematically shows a perspective view of a fibre optic cable holder 25. The fibre optic cable holder 25 is hollow. The fibre optic cable holder 25 is designed to be arranged around the power cable 1. In particular, the fibre optic cable holder 25 is sized to be arranged around the outer semiconducting layer 11 of the insulation system 5.

The fibre optic cable holder 25 comprises a first part 25a and a second part 25b, which can be attached to each other. The first part 25a and the second part 25b may for example be a first half and a second half, respectively, of the fibre optic cable holder 25.

The fibre optic cable holder 25 has a first axial end 25c and a second axial end 25d opposite the first axial end 25c.

The fibre optic cable holder 25 has a tapering section 25e. The tapering section 25e tapers in a direction from the second axial end 25d towards the first axial end 25c. The tapering section 25e is frustoconical.

At the first end, the fibre optic cable holder 25 may have an inner diameter which essentially is equal to or slightly larger than the outer diameter of the outer semiconducting layer 11.

The fibre optic cable holder 25 has a fibre optic cable storing section 25f. The fibre optic cable storing section 25f has an outer radius which is equal to or larger than a minimum bending radius of the fibre optic cable 19. The minimum bending radius of the fibre optic cable 19 is the smallest allowable bending radius of the fibre optic cable 19, which does not damage the fibre optic cable 19.

The fibre optic cable storing section 25f may have a cylindrical shape or it may be tapering, for example. The fibre optic cable storing section 25f may have a circular or an elliptical cross-sectional shape, for example. In case the fibre optic cable storing section 25f has an elliptical cross-sectional shape, the minor axis and the major axis should be dimensioned such that the fibre optic cable 19 does not bend more than the minimum bending radius when wound around the fibre optic cable storing section 25f.

The tapering section 25e transitions to the fibre optic cable storing section 25f in a direction from the first axial end 25c towards the second axial end 25d.

The fibre optic cable holder 25 comprises circumferentially distributed and circumferentially spaced apart radially outward extending wings 25g. The wings 25g may form an interface between the tapering section 25e and the fibre optic cable storing section 25f. The tapering section 25e may thus transition to the fibre optic cable storing section 25f via the wings 25g. The spaces between the wings 25g form axial openings between the tapering section 25e and the fibre optic cable storing section 25f.

The fibre optic cable holder 25 comprises a radially outwards extending end structure or end wall 25h. The end structure 25h may be a flange. The end structure 25h extends in the circumferential direction of the fibre optic cable holder 25 along part of or the entire circumference of the fibre optic cable holder 25. The end structure 25h may form the second axial end 25d of the fibre optic cable holder 25.

The fibre optic cable storing section 25f extends axially between the wings 25g and the end structure 25h.

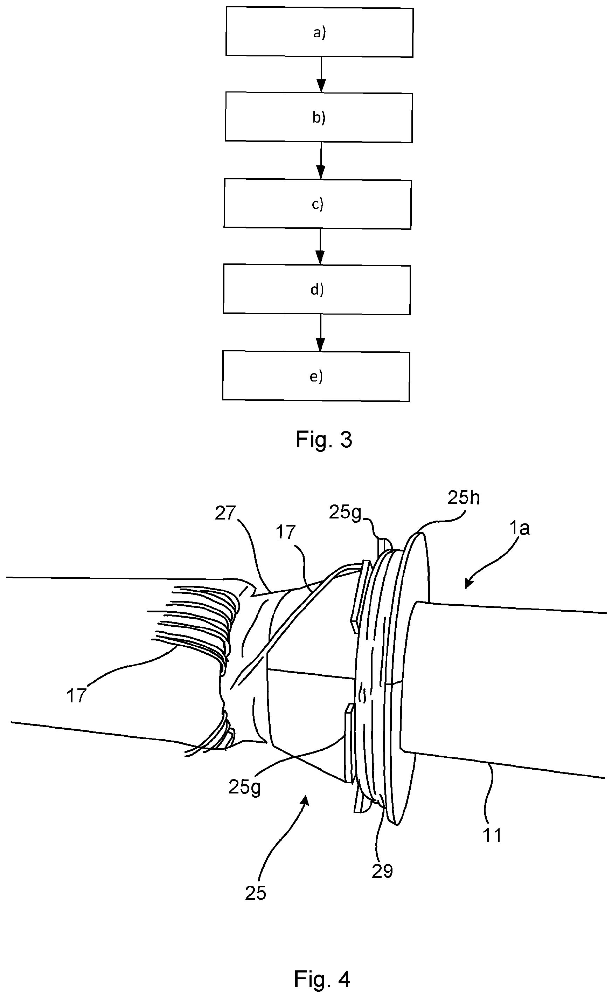

Method of jointing, terminating, or repairing the power cable 1 will now be described with reference to Figs 3-4.

In a step a) the power cable 1 is provided.

In a step b) outer layers of the power cable 1 are removed along an axial section 1a of the power cable 1. The axial section 1a may be several metres long, such as at least 2 or at least 4 metres. The outer layers may in the present example include the outer layer 23, the water blocking layer 21, and the screen layer 15. The outer layers are removed until the outer semiconducting layer 11 is exposed. Moreover, in step b) the fibre optic cable 19 is detached from the axial section 1a whereby a loose fibre optic cable section is obtained. If the power cable 1 comprises a plurality of fibre optic cables, each one is detached from the axial section 1a to obtain a plurality of loose fibre optic cable sections.

The loose fibre optic cable section is typically several metres long, usually longer than the axial length of the axial section 1a, because the loose fibre optic cable section has previously been arranged helically around the axial section 1a.

In the present example in which the power cable 1 comprises screen wires 17, in step b) the screen wires 17 are bent away from the axial section to expose the outer semiconducting layer 11. The screen wires 17 may for example be bent backwards, as shown schematically in Fig. 4.

In a step c) the fibre optic cable holder 25 is arranged around the outer semiconducting layer 11 of the axial section 1a which has been stripped. The fibre optic cable holder 25 may be arranged adjacent to an axial location where the screen wires 17 are bent. The first axial end 25c of the fibre optic cable holder 25 is arranged adjacent to the bent screen wires 17. The tapering section 25b tapers towards the bent screen wires 17.

Step c) may involve arranging the first part 25a and the second part 25b over the outer semiconducting layer 11 in the axial section 1a, from opposite sides of the power cable 1. The first part 25a and the second part 25b may be attached to each other for example by means of for example a tape 27 wound around the fibre optic cable holder 25. The tape 27 may be wound around the tapering section 25e and/or around the fibre optic cable storing section 25f. Alternatively, or additionally, the first part and the second part could be screwed or bolted together, snapped together, glued together, or they may be assembled with a bayonet connection, or any other suitable means.

In a step d) the loose fibre optic cable section is wound around the fibre optic cable storing section 25f. In step d) the loose fibre optic cable section is wound between the wings 25g and the radially outwards extending end structure 25h. In case the power cable 1 comprises several fibre optic cables, each loose fibre optic cable section is wound around the fibre optic cable storing section 25f in step d).

Prior to step d) each loose fibre optic cable section may be lead, from the screen layer 15, along the tapering section 25e to the fibre optic cable storing section 25f through an opening between two adjacent wings 25g.

After step d) an end of the/each loose fibre optic cable section may be fixated to the fibre optic cable holder 25. The loose fibre optic cable section may for example be fixed to the fibre optic cable holder 25 with tape. For example, tape 29 may be wound onto the loose fibre optic cable section, after the loose fibre optic cable section has been wound onto the fibre optical cable storing section 25f.

In a step e), following step d), jointing, terminating, or repair work is performed on the power cable 1. Step e) includes unwinding the loose fibre optic cable section from the fibre optic cable holder 25, removing the fibre optic cable holder 25 from the power cable 1, and terminating or jointing the loose fibre optic cable section.

Step e) may involve winding the loose fibre optic cable section around the axial section 1a, after it has been unwound from the fibre optic cable holder 25, before terminating or jointing the loose fibre optic cable section.

In case two power cables, such as the power cable 1 and another power cable, are to be joined in step e), then both power cables are subjected to steps a)-d), i.e., a respective fibre optic cable holder 25 is used for each power cable. The optical fibre cables of the two power cables may then be jointed in step e). Further, in step e), the conductor 3 of each power cable may be exposed along the respective axial section 1a, and a conductor joint may be made between the two conductors 3. This is followed by rebuilding of the insulation system, removal of the fibre optic cable holders 25, and electrical connection of the screen wires 17 of the two power cables.

In case of a repair or termination of the power cable 1, only one power cable 1 is involved in steps a)-e).

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Method of jointing, terminating, or repairing a power cable (1), the method comprising:
a) providing a power cable (1) comprising:
- a conductor (3),
- an insulation system (5) which includes an inner semiconducting layer (7) arranged around the conductor (3), an insulation layer (9) arranged around the inner semiconducting layer (7), and an outer semiconducting layer (11) arranged around the insulation layer (9), and
- a fibre optic cable (19),
b) removing outer layers of the power cable (1) along an axial section (1a) of the power cable (1) until reaching the outer semiconducting layer (11), and removing the fibre optic cable (19) from the axial section (1a) to thereby obtain a loose fibre optic cable section,
c) arranging a fibre optic cable holder (25) around the outer semiconducting layer (11) of the axial section (1a), the fibre optic cable holder (25) having a fibre optic cable storing section (25f) that has an outer radius which is equal to or larger than a minimum bending radius of the fibre optic cable (19),
d) winding the loose fibre optic cable section around the fibre optic cable storing section (25f), and
e) performing jointing, terminating, or repair work on the power cable (1), step e) including unwinding the loose fibre optic cable section from the fibre optic cable holder (25), removing the fibre optic cable holder (25) from the power cable (1), and terminating or jointing the loose fibre optic cable section.

2. Method as claimed in claim 1, wherein step e) involves winding the loose fibre optic cable section around the axial section (1a) before terminating or jointing the loose fibre optic cable section.

3. Method as claimed in claim 1 or 2, wherein the fibre optic cable holder (25) has a tapering section (25e) that transitions into the fibre optic cable storing section (25f), wherein prior to step d) the loose fibre optic cable section is lead along the tapering section (25e) to the fibre optic cable storing section (25f).

4. Method as claimed in claim 3, wherein the tapering section (25e) is frustoconical.

5. Method as claimed in claim 3 or 4, wherein the fibre optic cable holder (25) comprises circumferentially distributed and circumferentially spaced apart radially outward extending wings (25g), between which the loose fibre optic cable section is led from the tapering section (25e) to the fibre optic cable storing section (25f).

6. Method as claimed in claim 5, wherein the fibre optic cable holder (25) comprises a radially outwards extending end structure (25h) arranged axially spaced apart from the radially outwards extending wings (25g), the fibre optic cable storing section (25f) being formed axially between the radially outwards extending wings (25g) and the radially outwards extending end structure (25h), wherein in step d) the loose fibre optic cable section is wound between the radially outwards extending wings(25g) and the radially outwards extending end structure (25f).

7. Method as claimed in any of the preceding claims, wherein the fibre optic cable holder (25) comprises several parts (25a, 25b), and wherein step c) involves arranging the parts (25a, 25b) around the axial section (1a) and attaching the parts (25a, 25b) to each other.

8. Method as claimed in claim 7, wherein the parts (25a, 25b) are attached to each other by means of tape (27, 29).

9. Method as claimed in any of the preceding claims, wherein after step d) an end of the loose fibre optic cable section is fixated to the fibre optic cable holder (25).

10. Method as claimed in claim 9, wherein the end of the loose fibre optic cable section is fixated by means of tape (29).

11. Method as claimed in any of the preceding claims, wherein the power cable comprises a screen layer (15) including a plurality of screen wires (17) and the fibre optic cable (19) helically around the insulation system (5), wherein step b) involves bending the screen wires (17) away from the axial section (1a) to expose the outer semiconducting layer (11).

12. Method as claimed in, wherein in step c) the fibre optic cable holder (25) is arranged adjacent to an axial location where the screen wires (17) are bent.

13. Method as claimed in any of the preceding claims, wherein the fibre optic cable (19) is a fibre optic cable in metal tube (FIMT).

14. Method as claimed in any of the preceding claims, wherein the axial section (1a) is a plurality of metres long.

15. Method as claimed in any of the preceding claims, wherein the power cable (1) is a land power cable.

## Patentansprüche

1. Verfahren zum Verbinden, Abschließen oder Reparieren eines Stromkabels (1), wobei das Verfahren Folgendes umfasst:
a) Bereitstellen eines Stromkabels (1), umfassend:
- einen Leiter (3),
- ein Isolationssystem (5), das eine innere Halbleiterschicht (7) beinhaltet, die um den Leiter (3) angeordnet ist, eine Isolationsschicht (9) beinhaltet, die um die innere Halbleiterschicht (7) angeordnet ist, und eine äußere Halbleiterschicht (11) beinhaltet, die um die Isolationsschicht (9) angeordnet ist, und
- ein Glasfaserkabel (19),
b) Entfernen von äußeren Schichten des Stromkabels (1) entlang eines axialen Abschnitts (1a) des Stromkabels (1) bis zum Erreichen der äußeren Halbleiterschicht (11) und Entfernen des Glasfaserkabels (19) aus dem axialen Abschnitt (1a), um dadurch einen losen Glasfaserkabelabschnitt zu erhalten,
c) Anordnen eines Glasfaserkabelhalters (25) um die äußere Halbleiterschicht (11) des axialen Abschnitts (1a), wobei der Glasfaserkabelhalter (25) einen Glasfaserkabel-Speicherabschnitt (25f) aufweist, der einen Außenradius aufweist, der gleich oder größer als ein Mindestbiegeradius des Glasfaserkabels (19) ist,
d) Aufwickeln des losen Glasfaserkabelabschnitts um den Glasfaserkabel-Speicherabschnitt (25f) und
e) Durchführen von Verbindungs-, Abschluss- oder Reparaturarbeiten an dem Stromkabel (1), wobei Schritt e) das Abwickeln des losen Glasfaserkabelabschnitts von dem Glasfaserkabelhalter (25), das Entfernen des Glasfaserkabelhalters (25) von dem Stromkabel (1) und das Abschließen oder Verbinden des losen Glasfaserkabelabschnitts beinhaltet.

2. Verfahren nach Anspruch 1, wobei Schritt e) das Aufwickeln des Glasfaserkabelabschnitts um den axialen Abschnitt (1a) vor dem Abschließen oder Verbinden des losen Glasfaserkabelabschnitts einschließt.

3. Verfahren nach Anspruch 1 oder 2, wobei der Glasfaserkabelhalter (25) einen sich verjüngenden Abschnitt (25e) aufweist, der in den Glasfaserkabel-Speicherabschnitt (25f) übergeht, wobei vor Schritt d) der lose Glasfaserkabelabschnitt entlang des sich verjüngenden Abschnitts (25e) zu dem Glasfaserkabel-Speicherabschnitt (25f) geführt wird.

4. Verfahren nach Anspruch 3, wobei der sich verjüngende Abschnitt (25e) kegelstumpfförmig ist.

5. Verfahren nach Anspruch 3 oder 4, wobei der Glasfaserkabelhalter (25) in Umfangsrichtung verteilte und in Umfangsrichtung beabstandete, sich radial nach außen erstreckende Flügel (25g) umfasst, zwischen denen der lose Glasfaserkabelabschnitt von dem sich verjüngenden Abschnitt (25e) zu dem Glasfaserkabel-Speicherabschnitt (25f) geführt wird.

6. Verfahren nach Anspruch 5, wobei der Glasfaserkabelhalter (25) eine sich radial nach außen erstreckende Endstruktur (25h) umfasst, die axial beabstandet von den sich radial nach außen erstreckenden Flügeln (25g) angeordnet ist, der Glasfaserkabel-Speicherabschnitt (25f) axial zwischen den sich radial nach außen erstreckenden Flügeln (25g) und der sich radial nach außen erstreckenden Endstruktur (25h) ausgebildet ist, wobei in Schritt d) der lose Glasfaserkabelabschnitt zwischen den sich radial nach außen erstreckenden Flügeln (25g) und der sich radial nach außen erstreckenden Endstruktur (25f) aufgewickelt wird.

7. Verfahren nach einem der vorhergehenden Ansprüche, wobei der Glasfaserkabelhalter (25) mehrere Teile (25a, 25b) umfasst und wobei Schritt c) das Anordnen der Teile (25a, 25b) um den axialen Abschnitt (1a) und das Befestigen der Teile (25a, 25b) aneinander einschließt.

8. Verfahren nach Anspruch 7, wobei die Teile (25a, 25b) mittels Klebeband (27, 29) aneinander befestigt werden.

9. Verfahren nach einem der vorhergehenden Ansprüche, wobei nach Schritt d) ein Ende des losen Glasfaserkabelabschnitts an dem Glasfaserkabelhalter (25) fixiert wird.

10. Verfahren nach Anspruch 9, wobei das Ende des losen Glasfaserkabelabschnitts mittels eines Bandes (29) fixiert wird.

11. Verfahren nach einem der vorhergehenden Ansprüche, wobei das Stromkabel eine Abschirmschicht (15) umfasst, die eine Vielzahl von Abschirmdrähten (17) und das Glasfaserkabel (19) schraubenförmig um das Isolationssystem (5) beinhaltet, wobei Schritt b) das Biegen der Abschirmdrähte (17) von dem axialen Abschnitt (1a) einschließt, um die äußere Halbleiterschicht (11) freizulegen.

12. Verfahren nach einem der vorhergehenden Ansprüche, wobei in Schritt c) der Glasfaserkabelhalter (25) benachbart zu einer axialen Stelle angeordnet ist, an der die Abschirmdrähte (17) gebogen werden.

13. Verfahren nach einem der vorhergehenden Ansprüche, wobei das Glasfaserkabel (19) ein Glasfaserkabel in einem Metallrohr (FIMT, engl. Fiber In Metal Tube) ist.

14. Verfahren nach einem der vorhergehenden Ansprüche, wobei der axiale Abschnitt (1a) eine Vielzahl von Metern lang ist.

15. Verfahren nach einem der vorhergehenden Ansprüche, wobei das Stromkabel (1) ein Landstromkabel ist.

## Revendications

1. Procédé de jonction, terminaison ou réparation d'un câble d'alimentation (1), le procédé comprenant :
a) la fourniture d'un câble d'alimentation (1) comprenant :
- un conducteur (3),
- un système d'isolation (5) qui inclut une couche semi-conductrice intérieure (7) agencée autour du conducteur (3), une couche d'isolation (9) agencée autour de la couche semi-conductrice intérieure (7), et une couche semi-conductrice extérieure (11) agencée autour de la couche d'isolation (9), et
- un câble à fibre optique (19),
b) le retrait de couches extérieures du câble d'alimentation (1) le long d'une section axiale (1a) du câble d'alimentation (1) jusqu'à atteindre la couche semi-conductrice extérieure (11), et le retrait du câble à fibre optique (19) de la section axiale (1a) pour obtenir ainsi une section de câble à fibre optique lâche,
c) l'agencement d'un support de câble à fibre optique (25) autour de la couche semi-conductrice extérieure (11) de la section axiale (1a), le support de câble à fibre optique (25) présentant une section de stockage de câble à fibre optique (25f) qui présente un rayon extérieur supérieur ou égal à un rayon de courbure minimal du câble à fibre optique (19),
d) l'enroulement de la section de câble à fibre optique lâche autour de la section de stockage de câble à fibre optique (25f), et
e) la réalisation d'un travail de jonction, terminaison ou réparation sur le câble d'alimentation (1), l'étape e) incluant le déroulement de la section de câble à fibre optique lâche du support de câble à fibre optique (25), le retrait du support de câble à fibre optique (25) du câble d'alimentation (1), et la terminaison ou la jonction de la section de câble à fibre optique lâche.

2. Procédé selon la revendication 1, dans lequel l'étape e) implique l'enroulement de la section de câble à fibre optique lâche autour de la section axiale (1a) avant la terminaison ou la jonction de la section de câble à fibre optique lâche.

3. Procédé selon la revendication 1 ou 2, dans lequel le support de câble à fibre optique (25) présente une section conique (25e) qui transitionne dans la section de stockage de câble à fibre optique (25f), dans lequel, avant l'étape d), la section de câble à fibre optique lâche est dirigée le long de la section conique (25e) jusqu'à la section de stockage de câble à fibre optique (25f) .

4. Procédé selon la revendication 3, dans lequel la section conique (25e) est tronconique.

5. Procédé selon la revendication 3 ou 4, dans lequel le support de câble à fibre optique (25) comprend des ailes s'étendant vers l'extérieur de manière radiale et réparties de manière circonférentielle et espacées de manière circonférentielle (25g) entre lesquelles la section de câble à fibre optique lâche est dirigée de la section conique (25e) vers la section de stockage de câble à fibre optique (25f).

6. Procédé selon la revendication 5, dans lequel le support de câble à fibre optique (25) comprend une structure d'extrémité s'étendant vers l'extérieur de manière radiale (25h) agencée en étant espacée axialement des ailes s'étendant vers l'extérieur de manière radiale (25g), la section de stockage de câble à fibre optique (25f) étant formée axialement entre les ailes s'étendant vers l'extérieur de manière radiale (25g) et la structure d'extrémité s'étendant vers l'extérieur de manière radiale (25h), dans lequel, à l'étape d), la section de câble à fibre optique lâche est enroulée entre les ailes s'étendant vers l'extérieur de manière radiale (25g) et la structure d'extrémité s'étendant vers l'extérieur de manière radiale (25f).

7. Procédé selon l'une quelconque des revendications précédentes, dans lequel le support de câble à fibre optique (25) comprend plusieurs parties (25a, 25b), et dans lequel l'étape c) implique l'agencement des parties (25a, 25b) autour de la section axiale (1a) et la fixation des parties (25a, 25b) les unes aux autres.

8. Procédé selon la revendication 7, dans lequel les parties (25a, 25b) sont fixées les unes aux autres au moyen d'un ruban adhésif (27, 29).

9. Procédé selon l'une quelconque des revendications précédentes, dans lequel, après l'étape d), une extrémité de la section de câble à fibre optique lâche est fixée au support de câble à fibre optique (25).

10. Procédé selon la revendication 9, dans lequel l'extrémité de la section de câble à fibre optique lâche est fixée au moyen d'un ruban adhésif (29).

11. Procédé selon l'une quelconque des revendications précédentes, dans lequel le câble d'alimentation comprend une couche de blindage (15) incluant une pluralité de fils de câblage (17) et le câble à fibre optique (19) est enroulé de manière hélicoïdale autour du système d'isolation (5), dans lequel l'étape b) implique la flexion des fils de blindage (17) à l'écart de la section axiale (1a)) pour exposer la couche semi-conductrice extérieure (11).

12. Procédé selon l'une quelconque des revendications précédentes, dans lequel, à l'étape c), le support de câble à fibre optique (25) est agencé adjacent à un emplacement axial où les fils de blindage (17) sont fléchis.

13. Procédé selon l'une quelconque des revendications précédentes, dans lequel le câble à fibre optique (19) est un câble à fibre optique dans un tube métallique (FIMT).

14. Procédé selon l'une quelconque des revendications précédentes, dans lequel la section axiale (1a) mesure plusieurs mètres de long.

15. Procédé selon l'une quelconque des revendications précédentes, dans lequel le câble d'alimentation (1) est un câble d'alimentation terrestre.
